# EUROPEAN PATENT SPECIFICATION

(11) **EP 0 596 927 B1**
(45) Date of publication and mention of the grant of the patent: **23.08.1995**
(21) Application number: 92915772.5
(22) Date of filing: 17.07.1992
(51) Int. Cl.: B01D 53/38, B01J 23/34

(54) **CATALYST AND CATALYTIC REDUCTION**
Katalysator und Katalytische Reduktion
CATALYSEUR ET REDUCTION CATALYTIQUE

(30) Priority: 29.07.1991 EP 91306928
(43) Date of publication of application: 18.05.1994
(73) Proprietor: BRITISH TECHNOLOGY GROUP LTD, London SE1 6BU (GB)
(72) Inventor: KAPTEIJN, Freek, NL-1018 WV Amsterdam (NL); SINGOREDJO, Lydia, NL-1106 JE Amsterdam (NL)
(74) Representative: Neville, Peter Warwick
(86) International application number: GB9201312
(87) International publication number: WO9302776

(56) References cited:
- EP-A- 0 256 590
- FR-A- 2 393 602
- GB-A- 2 079 172
- Staub, Reinhaltung der Luft, vol. 49, no. 2, February 1989, (Berlin, DE) W.WEISWEILER et al.: "Umweltverträgliche Katalysatoren zur Entstickung", pp. 37-43

## Description

This invention relates to a catalyst comprising a metal on a porous support, and to a method of making such a catalyst. The invention also relates to a method of reduction using the catalyst.

The natural gas industry has long sought a way in the presence of excess oxygen of removing oxides of nitrogen from flue gas, which may typically be at 375-425K and may contain 13-14 volume % water vapour, 5-6% oxygen, 6-7% carbon dioxide and 100ppm nitric oxide. Oxides of nitrogen can also arise in flue gas in other industries where combustion occurs and in petrol motor car exhausts. It is desirable to convert these compounds into harmless compounds before they are released into the atmosphere.

EP-A-257307 discloses a catalyst for decomposing nitrogen oxides in combustion waste gas despite the presence of arsenic compounds in the latter, the catalyst comprising titanium; arsenic or manganese; and optionally other base metals, all in the form of oxides.

EP-B-256590 discloses a titanium/vanadium catalyst on a silica carrier for reducing nitrogen oxides in the presence of ammonia to nitrogen and-water. This is stated in the EP-B to be only 64% effective at 423K even at a gas hourly space velocity (explained later) of 10000, which is too low a throughput for some large-scale industries.

Further catalysts for this reaction are disclosed in Catalysis Today 7 (1990) 157-165, (copper salts on carbon supports), Ind Eng Chem Prod Res Dev 20 (1981) 301-304 (molybdenum on titania/zirconia/alumina/silica, International Chemical Engineering 15 (July 1975) 546-549 (Pt, CuO-Cr₂O₃, CuO, V₂O₅, NiO, Fe₂O₃, MnO-Cr₂O₃, MoO₃, Co₃O₄, MnO₂, Cr₂O₃ and WO₃), and Bulletin of Chemical Society of Japan 54 (1981) 3347-3350 (Mn₂O₃ and Mn₂O₃-Co₃O₄ in 1mm particles from calcined carbonate-precipitated nitrate solution), the last-named suffering from slow partially irreversible poisoning by sulphur dioxide.

Wakker and Gerritsen, Proc American Chemical Society, Division of Fuel Chemistry 35(1) (1990) 170 discloses a catalyst of MnO supported on gamma-alumina, the MnO being obtained by impregnating the alumina in manganese acetate, sulphate, nitrate or oxalate solution, drying, optionally calcining, and reducing with hydrogen at 600°C. This catalyst can remove ,H₂S from hot reactor gases. However, it cannot reduce oxides of nitrogen.

A similar catalyst (manganese acetate or nitrate solution impregnated into steam-activated carbonised peat and calcined in 2% oxygen) was disclosed for reducing NO with ammonia at the International Symposium on Carbon, Tsukuba, 1990, page 590 of the Extended Abstracts. This catalyst can successfully reduce NO below 425K but its activity decreases irreversibly above that temperature. This is a serious problem since it cannot be guaranteed that the temperature of a flue in an industrial process (such as petrochemical cracking) will not accidentally rise above 425K.

According to the present invention, a process of preparing a catalyst for the reduction of nitrogen oxide comprises applying a manganese salt in solution to a porous inorganic carrier, removing the solvent, and subjecting the carrier (including the manganese compound) to a heat treatment which oxidises Mn(II) and which is conducted at:
from 550 to 625K for at least 12 hours; or
from 625 to 720K for at least 4 hours; or
from 720 to 830K for at least 1½ hours.
Preferably the porous carrier comprises alumina; it may be gamma-alumina or alumina-silica. Preferably the manganese salt is an organic salt such as a carboxylate such as acetate or oxalate. The heat treatment is preferably in the presence of at least 0.01 or 0.03 atmospheres oxygen, more preferably at least 0.05 atmospheres, for example at least 0.1 atmospheres. The oxygen presence is most conveniently the air, or may be ½ atmosphere or more, such as pure oxygen.

The heat treatment may be performed at from 720K, more preferably from 750K, and preferably at up to 830K, more preferably up to 800K. The preferred duration of the heat treatment depends on the temperature, as follows:-
550-625K: 12 to 48 hours, preferably 18 to 36 hours
625-720K: 4 to 18 hours, preferably 6 to 12 hours
720-830K: 1½ to 6 hours, preferably 2 to 4 hours.

The upper time limits may be exceeded but there is no advantage. Beforehand, if proceeding above 625K, it preferably takes at least 1 hour from passing 525K to passing 625K. In that case, the porous inorganic carrier is preferably gamma-alumina, silica, titania, or alumina-silica and may be loaded with titanium dioxide or tungsten trioxide or both, before or at the same time as or after applying the manganese compound, and the tungsten trioxide may be applied in the form of a tungstate, preferably in solution, preferably of ammonium. If TiO₂ is used in the carrier, tungsten and manganese compounds may be added in either order or simultaneously.

The preferred use of the catalyst made in this way is to reduce nitrogen oxide in the presence of oxygen, using a compound containing N and H such as ammonia, preferably at up to 475K. For applications where ammonia is not practical, such as motor cars, a solid compound may be used, preferably containing amine groups, e.g. urea (NH₂)₂C=O.

The invention will now be described by way of example.

A catalyst was synthesised for the selective catalytic reduction of nitric oxide NO in stack or flue gases at low temperatures (100-200°C). The reduction is effected with ammonia NH₃ and proceeds thus: 4NO + 4NH₃ + O₂ → 4N₂ + 6H₂O. Also nitrogen dioxide NO₂ is in principle able to be reduced to environmentally innocuous nitrogen and water by a corresponding reaction, but consuming less elemental oxygen.

The catalyst was based on manganese oxide on a porous inorganic particulate support, and was made as follows:

The support used in series A of the examples was γ-Al₂O₃, in series B = SiO₂, C = TiO₂, and D =SiO₂-Al₂O₃. The γ-Al₂O₃ had a BET surface area of 200m²/g, a Vₚ of 0.5cm³/g and a dₚ of 210-250»m.

The support could be modified by loading or covering its internal surface (i.e. its pores) and its external surface with a highly dispersed modifier in as near as possible monolayer form, or quarter-monolayer, or up to 10% by weight. The modifier is designated in the examples thus:
0 = no modifier
1 = TiO₂
2 = WO₃

Examples AO thus refer to an unmodified γ-alumina support, and Examples Bl to a silica support loaded with TiO₂, in that case 10% by weight of TiO₂. The WO₃ was applied by decomposing ammonium tungstate in situ and ammounted to 6 weight %. Both could be present together. Heavier and lighter loadings of modifier may also be used.

The manganese oxide was applied by stirring the support (which had been dried for 24 hours at 393K) in a near-saturated (or, If desired, less concentrated) precursor solution (in demineralised water or any other solvent not leaving undesirable residues) of a manganese salt or complex. This could be inorganic, e.g.
(i) manganous nitrate Mn(NO₃)₂ or organic, e.g.
(ii) manganous acetate Mn(CH₃COO)₂,
(iii) manganous oxalate,
(iv) manganese-EDTA complex or
(v) for the Mn-W combination catalyst, a mixture of (ii) + ammonium tungstate (NH₄)₆H₂W₁₂0₄₀, used in that order (see below)
Examples AOi thus refer to an unmodified γ-alumina support on which manganese oxide was deposited derived from manganous nitrate precursor.

The volume of the precursor solution was equal to the volume of the pores in the support. The precursor solution was allowed to fill the pore volume of the support by the so-called "pore volume impregnation" or "incipient wetness" method. Solvent was removed (in the case of water) by allowing to dry at room temperature overnight (24 hours was used in case (v) above), then raising to 50°C for 2 hours, then 60°C for 2 hours, then 70°C for 2 hours, then 85°C (about 360K) overnight.

The procedure was repeated as often as necessary to achieve the desired manganese loading of the support. A less concentrated solution of precursor could be sufficient if a less heavy manganese loading is desired; for the same loading, correspondingly more repetitions of the impregnation-plus-solvent-removal would be needed.

Alternatively, a dry procedure performed directly at 85-100°C could be sufficient.

The sample was then calcined by heating it in air or oxygen (no differences found) at 4K/min to 575K (300°C), held for 1 hour to allow the salts/complexes to decompose to oxide, heated further at 4K/min to 775K and held for 3 hours. Instead of 775K, 725K could be used at the cost of incomplete calcination (which would lower the catalytic activity) and 830K could be used but at the cost of a diminished catalytic activity caused by vapour-phase loss of manganese or thermal transformation of catalytically active phase into a less active one. The 3 hours could be extended to e.g. 24 hours but it made no difference. After slow cooling to room temperature, the sample was ready for use. This procedure, according to the number of impregnations with the precursor, yielded loadings of 3.3% Mn (calculated as the metal) by weight, 8.3% and 15.5%. These are designated in the examples as AOi3.3 etc.

For case (v), these operations are followed by impregnating with the ammonium tungstate solution, with again drying and calcining as described above.

In more general terms, where a modifier is present, it could either be calcined before the addition of manganese precursor or could be merely dried, or vice versa, i.e. add manganese precursor first, then dry and optionally calcine, then add modifier, dry and calcine.

The kind of active phase present on the catalyst due to the oxidative thermal treatment of the catalyst can be sensitively detected using thermal programmed reduction, which yields distinctive "signatures", representing the several reduction steps of the metal oxide on the support.

The catalysts were then tested on a gas stream flowing at a rate of 60 litres (STP equivalent) of gas per gram of catalyst-including-support per hour, in other words a volume hourly space velocity of 54000h⁻¹, otherwise equivalent to 54000 changes per hour, the gas stream being of composition 500 ppm NO, 550 ppm NH₃, 2% O₂ and balance helium.

Catalyst AOii achieved over 95% conversion of the NO to N₂ at 425K with minimal N₂O byproduct over a 200-hour test. The latter finding is valuable since the catalyst will not decompose N₂O with ammonia. Above 475K, the catalyst started to oxidise the ammonia, with undesirable production of NO (counterproductive) and N₂O (nuisance). Above 300°C the catalyst is not recommended because of the possible decreasing selectivity towards N₂. The catalyst was selective towards NO reduction; in particular, it did not catalyse the reduction of other flue gases such as CO₂.

The N₂, and the N₂O which is sometimes observed, have been proved to arise from the reaction N¹O + N²H₃ + oxygen → N¹N² or N¹N²O + water, i.e. not solely from the oxidation of ammonia but jointly from the NO. The formation of N₂O can be almost eliminated by WO₃-loading of a gamma-aluminia catalyst support (Examples A2xn), and can be lessened (with an accompanying gain in percentage removal of NO) by 10% TiO₂-loading of a silica catalyst support (Examples Blxn). It can also be lessened by diminishing the amount of manganese catalyst used, but this may be undesirable especially in cleaning damp flue gas.

Certain combinations of support and precursor yielded especially active and selective catalysts, such as (5/C/) (i), and (A/D) (ii/iii/iv). Especially preferred were Examples A.ii8.4, B(1+2)ii8.4 (at higher temperatures, e.g. 540-560K) and BOi8.4.

Exposure to sulphur dioxide, in particular 2% SO₂ at 525K, tends to deactivate the catalysts, but Example series A survived best. Exposure to water inhibits the catalyst but this effect can be compensated by increasing the amount of manganese or using a lower volume hourly space velocity (which might however be industrially undesirable).

Example Blii8.4 removed 80% of NO at 400K and 100% in the range 440-475K, and still removed over 95% at 563K. Example B(1+2)ii8.4 achieved 100% removal in the range 525-575K.

Example AOii8.4 has achieved 95% conversion of NO continuously for 200 hours, and can do so over the wide temperature range 425-525K, which simplifies process control. Example AOi8.4 can achieve 97% or better around 475-525K but falls away more sharply outside this range.

Varying the manganese loading while keeping all other conditions constant had little effect up to 500K, but at 575K the 3.3 weight % catalyst was still achieving 97% NO conversion (same as 500K) while the 8.4% and 15.5% catalysts had fallen to 90% conversion.

Examples DOx8.4 were superior at all temperatures to Examples D2x8.4

A survey of Examples AOv is given in Table 1. The catalysts are designated by the number of metal atoms per nm² of initial support area. For the sake of clarity the weight content of the metal oxide is also included in Table 1.

**Table 1**

| Metal oxide (metal atoms/nm²) | Weight content (%) | |
|---|---|---|
| | Mn₂0₃ | W0₃ |
| (a) Mn₂0₃(1.86) | 4.7 | - |
| (b) Mn₂0₃(5.00) | 11.6 | - |
| (c) Mn₂0₃(10.00) | 20.8 | - |
| (d) Mn₂0₃(5.00)-W0₃(1.07) | 10.8 | 6.8 |
| (e) W0₃(1.42) | - | 9.8 |

Experiment (i) The standard activity measurements on NO conversion were carried out at atmospheric pressure, using 50 mg of catalyst and between 385 K and 575 K at a volume hourly space velocity of 58.000 h⁻¹. The reactor feed contained 500 ppm NO, 550 ppm NH₃, 2 vol% O₂ and He as balance. The volume hourly space velocity was doubled for (c) and lessened for (a) so that VHSV/Mn was constant.

Experiment (ii) To investigate the effect of H₂O on the NO conversion some experiments have been carried out with addition of H₂O at 435 K at a volume hourly space velocity of 31.000 h⁻¹. In this case the reaction mixture had the following composition: 525 ppm NO, 550 ppm NH₃, 2.5 vol% O₂, with either 0, 4.6 or 8.7 vol% H₂O and Ar as balance. Sample (c) was used for this experiment.

Experiment (iii) A long run experiment of 600 h at 425 K under standard conditions has been carried out. In some of the experiments ¹⁵NH₃ was employed to trace the origin of both N atoms in the reaction products.

Experiment (iv) Sulfatation of the samples has been performed in a thermobalance by using an air flow, containing 2000 ppm SO₂. The sulfatation procedure starts with drying the sample at 425 K in air, after which the temperature is decreased to 325 K. Then the sulfatation of the sample starts, while the temperature is increased at a rate of 5 K.min⁻¹ to 475K. At this final temperature sulfatation is continued for 15 minutes, after which the catalysts have been tested at 425 K under the standard experimental conditions.

The results of Experiment (i) on the catalysts from Table 1 show that sample (e) hardly exhibits any NO reduction activity, having a comparable activity as the γ-Al₂O₃ support, (d) being slightly inferior. Differences in NO conversions between the other catalysts are only observable below 475 K. In the higher temperature region no differences can be discerned, all the NO conversions being 95-100% but decreasing above 525K.

Besides N₂ formation from the NO, less desirable N₂O formation has been observed above 425 for all the catalysts of Table 1, but by far the least N₂O arose from (d), and the most from the most Mn-rich catalysts.

Experiment (ii) yielded the following results: NO conversion = 98% (no H₂O); = 67% (4.6 vol% H₂O); = 47% (8.7 vol% H₂O). H₂O reversibly inhibits the reaction, since upon removing the H₂O the NO conversion returns within a few minutes to the original higher value.

In Experiment (iv) on sample (b), the NO conversion decreases from 95% to 85% after the sulfatation procedure. So it can be concluded that sample (b) still retains a high (85%) activity, even after being subjected to 2000 ppm SO₂ in air.

Experiment (iii) on sample (b) demonstrates that this catalyst exhibits a highly stable activity (about 94% NO conversion) after approximately 150 h.

Sample (d) already operates at 325K. Ammonia was adsorbed first, catalyst was flushed to remove gaseous residual ammonia, and a mixture of NO and oxygen was passed over the catalyst. This resulted in the instantaneous formation of N₂ due to the reaction between NO and ammonia at 50C. The presence of oxygen is needed, otherwise the temperature has to be raised to above 100C. Generally speaking, the reaction rate is zero order in ammonia, and 0.4 order in NO and also in oxygen. Nitrous oxide (N₂O) was not observed in this type of experiment.

This opens up applications in systems whereby the catalyst is first loaded with ammonia, and then exposed to the NO-containing atmosphere. This separately loading and reacting may avoid the escape of ammonia to the environment, an important issue in this type of catalysis.

Experiments with catalysts loaded with 1 and 2 wt% Mn on alumina confirmed that these are as active per unit of Mn and selective as the 3 wt% Mn catalyst.

## Claims

1. Process of preparing a catalyst for the reduction of nitrogen oxide, comprising applying a manganese salt in solution to a porous inorganic carrier, removing the solvent, and subjecting the carrier (including the manganese compound) to a heat treatment which tends to oxidise Mn(II) and which is conducted at:
from 550 to 625K for at least 12 hours; or
from 625 to 720K for at least 4 hours; or
from 720 to 830K for at least 1½ hours

2. Process according to Claim 1 , wherein the porous carrier comprises alumina.

3. Process according to Claim 1 or 2, wherein the manganese salt is a manganese organic salt.

4. Process according to Claim 3, wherein the manganese salt is a carboxylate.

5. Process according to any preceding claim, wherein the heat treatment is at above 625K and takes at least 1 hour from passing 525K to passing 625K.

6. Process according to any preceding claim, wherein the porous carrier is gamma-alumina, silica, titania, or alumina-silica.

7. Process according to Claim 6, wherein the carrier is loaded with titanium dioxide or with tungsten trioxide or with both, before or at the same time as applying the manganese compound.

8. Process according to Claim 7, wherein the tungsten trioxide is applied in the form of a tungstate which is decomposed in situ.

9. Process according to Claim 8, wherein the tungstate is an ammonium tungstate solution.

10. Process according to any preceding claim, wherein the manganese compound is a nitrate, acetate, oxalate or EDTA complex.

11. Process according to any preceding claim, wherein the oxygen to oxidise the Mn is present in air.

12. Process according to any preceding claim, wherein the heat treatment is in the presence of at least 0.03 atmosphere oxygen.

13. Process according to any preceding claim, wherein the heat treatment is at 720-830K.

14. Process according to Claim 13, wherein the heat treatment is at 750-800K.

15. Process according to any preceding claim, wherein the heat treatment is conducted at:
from 550 to 625K for 18-36 hours; or
from 625 to 720K for 6-12 hours; or
from 720 to 830K for 2-4 hours.

16. Use of a catalyst made according to any preceding claim.

17. Use of a catalyst according to Claim 16, to reduce nitrogen oxide in the presence of oxygen, using a compound containing nitrogen and hydrogen, such as urea or ammonia.

## Patentansprüche

1. Verfahren zur Herstellung eines Katalysators zur Reduktion von Stickstoffoxid, umfassend das Aufbringen eines Mangansalzes in Lösung auf einen porösen anorganischen Träger, Entfernung des Lösungsmittels und Wärmebehandlung des Trägers (einschließlich der Manganverbindung) zur oxidation von Mn(II), die wie folgt durchgeführt wird:
mindestens 12 h bei 550 bis 625 K oder
mindestens 4 h bei 625 bis 720 K oder
mindestens 1,5 h bei 720 bis 830 K.

2. Verfahren nach Anspruch 1, wobei der poröse Träger Tonerde umfaßt.

3. Verfahren nach Anspruch 1 oder 2, wobei das Mangansalz ein organisches Mangansalz ist.

4. Verfahren nach Anspruch 3, wobei das Mangansalz ein Carboxylat ist.

5. Verfahren nach einem der vorangehenden Ansprüche, wobei die Wärmebehandlung bei über 625 K durchgeführt wird und mindestens 1 h von 525 K bis 625 K erfordert.

6. Verfahren nach einem der vorangehenden Ansprüche, wobei der poröse Träger γ-Tonerde, Kieselsäure, Titanoxid oder Tonerde/Kieselsäure ist.

7. Verfahren nach Anspruch 6, wobei der Träger mit Titandioxid oder mit Wolframtrioxid oder beidem beladen wird, vor oder gleichzeitig mit dem Aufbringen der Manganverbindung.

8. Verfahren nach Anspruch 7, wobei das Wolframtrioxid in Form eines Wolframats aufgebracht wird, das in situ zersetzt wird.

9. Verfahren nach Anspruch 8, wobei das Wolframat eine Ammoniumwolframat-Lösung ist.

10. Verfahren nach einem der vorangehenden Ansprüche, wobei die Manganverbindung ein Nitrat, Acetat, oxalat oder EDTA-Komplex ist.

11. Verfahren nach einem der vorangehenden Ansprüche, wobei der Sauerstoff zur Oxidation von Mn in Luft vorhanden ist.

12. Verfahren nach einem der vorangehenden Ansprüche, wobei die Wärmebehandlung in Gegenwart von mindestens 0,03 atm Sauerstoff durchgeführt wird.

13. Verfahren nach einem der vorangehenden Ansprüche, wobei die Wärmebehandlung bei 720-830 K durchgeführt wird.

14. Verfahren nach Anspruch 13, wobei die Wärmebehandlung bei 750-800 K durchgeführt wird.

15. Verfahren nach einem der vorangehenden Ansprüche, wobei die Wärmebehandlung wie folgt durchgeführt wird:
18-36 h bei 550 bis 625 K oder
6-12 h bei 625 bis 720 K oder
2-4 h bei 720 bis 830 K.

16. Verwendung eines Katalysators nach einem der vorangehenden Ansprüche.

17. Verwendung eines Katalysators nach Anspruch 16 zur Reduktion von Stickstoffoxid in Gegenwart von Sauerstoff unter Anwendung einer Verbindung, enthaltend Stickstoff und Wasserstoff, wie Harnstoff oder Ammoniak.

## Revendications

1. Procédé de préparation d'un catalyseur pour la réduction d'oxyde d'azote, comprenant l'application d'un sel de manganèse en solution sur un support inorganique poreux, l'élimination du solvant, et la soumission du support (comportant le composé de manganèse) à un traitement thermique qui a tendance à oxyder Mn(II) et qui est mené :
pendant au moins 12 heures entre 550 et 625°K; ou
pendant au moins 4 heures entre 625 et 720°K; ou
pendant au moins 1 heure et demie entre 720 et 830°K.

2. Procédé selon la revendication 1, dans lequel le support poreux comprend de l'alumine.

3. Procédé selon la revendication 1 ou 2, dans lequel le sel de manganèse est un sel organique de manganèse.

4. Procédé selon la revendication 3, dans lequel le sel de manganèse est un carboxylate.

5. Procédé selon l'une quelconque des revendications précédentes, dans lequel le traitement thermique est effectué à plus de 625°K, le passage de 525°K à 625°K prenant au moins 1 heure.

6. Procédé selon l'une quelconque des revendications précédentes, dans lequel le support poreux est de la gamma-alumine, de la silice, du dioxyde de titane ou un aluminosilicate.

7. Procédé selon la revendication 6, dans lequel le support est chargé de dioxyde de titane et/ou de trioxyde de tungstène, avant ou en même temps que l'application du composé de manganèse.

8. Procédé selon la revendication 7, dans lequel le trioxyde de tungstène est appliqué sous la forme d'un tungstate qui est décomposé *in situ.*

9. Procédé selon la revendication 8, dans lequel le tungstate est une solution de tungstate d'ammonium.

10. Procédé selon l'une quelconque des revendications précédentes, dans lequel le composé de manganèse est un complexe de nitrate, d'acétate, d'oxalate ou d'acide versénique.

11. Procédé selon l'une quelconque des revendications précédentes, dans lequel l'oxygène pour l'oxydation du Mn est présent dans l'air.

12. Procédé selon l'une quelconque des revendications précédentes, dans lequel le traitement thermique est effectué en présence d'oxygène au moins à 0,03 atmosphère.

13. Procédé selon l'une quelconque des revendications précédentes, dans lequel le traitement thermique s'effectue entre 720 et 830°K.

14. Procédé selon la revendication 13, dans lequel le traitement thermique est effectué entre 750 et 800°K.

15. Procédé selon l'une quelconque des revendications précédentes, dans lequel le traitement thermique est effectué :
pendant 18 à 36 heures entre 550 et 625°K; ou
pendant 6 à 12 heures entre 625 et 720°K; ou
pendant 2 à 4 heures entre 720 et 830°K.

16. Utilisation d'un catalyseur selon l'une quelconque des revendications précédentes.

17. Utilisation d'un catalyseur selon la revendication 16, pour la réduction d'oxyde d'azote en présence d'oxygène, à l'aide d'un composé contenant de l'azote et de l'hydrogène, tel que l'urée ou l'ammoniac.
